# EUROPEAN PATENT SPECIFICATION

(11) **EP 1 591 363 B1**
(45) Date of publication and mention of the grant of the patent: **02.11.2006**
(21) Application number: 03815745.9
(22) Date of filing: 27.11.2003
(51) Int. Cl.: G06Q 90/00, B65B 57/00

(54) **WRAPPING/FILLING METHOD AND COMMODITY MANAGEMENT METHOD**
EINPACK-/EINFÜLLVERFAHREN UND WARENMANAGEMENTVERFAHREN
PROCEDE ET DISPOSITIF D'EMBALLAGE/REMPLISSAGE ET DE GESTION D'UN PRODUIT

(30) Priority: 05.02.2003 JP 2003028191
(43) Date of publication of application: 02.11.2005
(73) Proprietor: Tetra Laval Holdings & Finance S.A., 1009 Pully (CH)
(72) Inventor: YAMAJI, Keizo, c/o NIHON TETRA PAK K.K., Tokyo 102-8544 (JP)
(74) Representative: Müller, Hans-Jürgen
(86) International application number: PCT/JP2003/015131
(87) International publication number: WO 2004/069662

(56) References cited:
- EP-A- 0 832 818
- WO-A-02/03273
- WO-A1-02/03273
- JP-A- 2000 006 926
- JP-A- 2002 024 584
- JP-A- 2003 085 417

## Description

### Field of the Invention

The present invention relates to a wrapping/filling method, and commodity management method.

### Background of the Invention

In general, as for commodities, for example, liquid foods such as juice, green tea, dairy products, dry foods such as pet foods, manufacturers produce a commodity content and perform wrapping/filling of the content, which is delivered to consumers via distributors and retailers. Distributors and retailers sell commodities on their own responsibility, which they do not even produce nor manufacture.

Not only the above-mentioned manufacturers, retailers and distributors but also small groups and individuals or the like sometimes sell commodities on their own responsibility, though which is limited to a certain field of commodity. However, it is difficult for anybody, such as a small group and individual, to easily select a commodity content and commodity wrapping vessel from among a wide range of choices at any time and anywhere.

### Disclosure of the Invention

The purpose of the present invention is to provide a method that anybody such as a small group and individual can easily select a commodity content and commodity wrapping vessel from among a wide range of choices at any time and anywhere and perform the wrapping/filling of the commodity content in a small scale including a test wrapping/filling, to provide a wrapping/filling device, which can be used for the above-mentioned method, to provide a system for wrapping/filling, by which anybody can perform wrapping/filling as commodities of their own anytime anywhere in a small scale including a test wrapping/filling, and to provide a commodity management method.

The wrapping/filling method according to the present invention comprises: connecting a computer of said client having a request condition to a server computer having a wrapping/filling condition database via the Internet, when a client requests wrapping/filling of a commodity; obtaining wrapping/filling information of said client, which is appropriate for said request condition and said wrapping/filling condition; transmitting said wrapping/filling information from said server computer to said wrapping/filling device according to a request from said client computer; and filling a commodity content according to said wrapping/filling information by said wrapping/filling device and wrapping the same by a wrapping vessel according to said information.

In a preferred embodiment of the wrapping/filling method according to the present invention, the wrapping vessel according to the wrapping/filling information is selected from paper vessels, bottles, cans and plastic vessels.

In the preferred embodiment of the wrapping/filling method according to the present invention, the commodity content according to the wrapping/filling information is selected from liquid foods, fluid foods and solid foods.

In the preferred embodiment of the wrapping/filling method according to the present invention, the design printed on the outward surface of the wrapping vessel of the wrapping/filling device is included in the wrapping/filling information.

Another wrapping/filling method according to the present invention comprises in the wrapping/filling device, filling the commodity content according to the following wrapping/filling information and wrapping the same by the wrapping vessel according to the information:
the wrapping/filling information of a client, which is appropriate for the request condition and the wrapping/filling condition obtained by connecting the computer of the client having a request condition to the server computer having a wrapping/filling condition database, when the client requests wrapping/filling of the commodity via the Internet, the wrapping/filling information being transmitted from the server computer to the wrapping/filling device according to the request from the client computer.

The wrapping/filling device according to the present invention fills the commodity content according to the following wrapping/filling information and wraps by the wrapping vessel according to the information:
the wrapping/filling information of a client, which is appropriate for a request condition and a wrapping/filling condition obtained by connecting the computer of the client having said request condition, who requests the wrapping/filling of the commodity, to the server computer having said wrapping/filling condition database via the Internet, the wrapping/filling information being transmitted from said server computer to said wrapping/filling device according to the request from said client computer.

In the preferred embodiment of the wrapping/filling device according to the present invention, a transmitting part transmitting result signals of the wrapping/filling of the wrapping/filling device to the server computer is provided, and the result signals of the wrapping/filling is transmitted from the server computer to the client computer.

The method for providing wrapping/filling according to the present invention comprises: offerring a wrapping/filling condition via the Internet by a server computer having a wrapping/filling condition database when a client having a request condition requests wrapping/filling of the commodity; transmitting wrapping/filling information of the client, which is appropriate for said request condition and said wrapping/filling condition, from said server computer to a wrapping/filling device according to the request from a client computer; filling a commodity content according to said wrapping/filling information by the wrapping/filling device and wrapping the same by a wrapping vessel according to said information.

A commodity management method according to the present invention comprises: in a wrapping/filling device, receiving a part of or all of result information obtained by filling a commodity content according to the following wrapping/filling information, and by wrapping the same by the wrapping vessel according-to said information by the computer of the provider of said wrapping vessel and/or content through a server computer; and analyzing said wrapping vessel and/or the supply trend of the content and the inventory control to perform the commodity management from said result information:
the wrapping/filling information of a client, which is appropriate for the request condition and the wrapping/filling condition obtained by connecting the computer of the client having a request condition to the server computer having a wrapping/filling condition database, when the client requests wrapping/filling of the commodity via the Internet, the wrapping/filling information being transmitted from the server computer to the wrapping/filling device according to the request from the client computer.

The wrapping/filling information of a client, which is appropriate for the request condition and the wrapping/filling condition obtained by connecting the computer of the client having a request condition to the server computer having a wrapping/filling condition database, when the client requests wrapping/filling of the commodity via the Internet, wherein according to the request from the client computer, the wrapping/filling information being transmitted from the server computer to the wrapping/filling device.

### Brief Description of the Drawings

Fig.1 is a schematic view of an example, which employs the wrapping/filling method or method for providing wrapping/filling according to the present invention.
Fig.2 is a schematic view of an example of the wrapping/filling device according to the present invention.
Fig.3 is a schematic view of an example, which employs the commodity management method according to the present invention.
Fig.4 is a flow chart illustrating an example of the procedure for performing wrapping/filling request according to the present invention.

### Best mode for Carrying out the Invention

Embodiments of the present invention will be explained as follows.

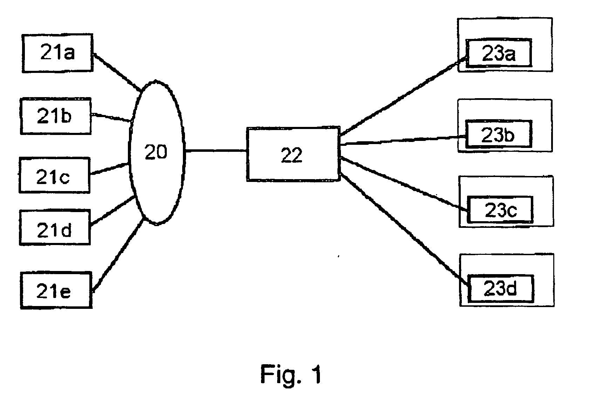

Fig.1 is a schematic view of an example of a system, which employs the wrapping/filling method or method for providing wrapping/filling according to the present invention.

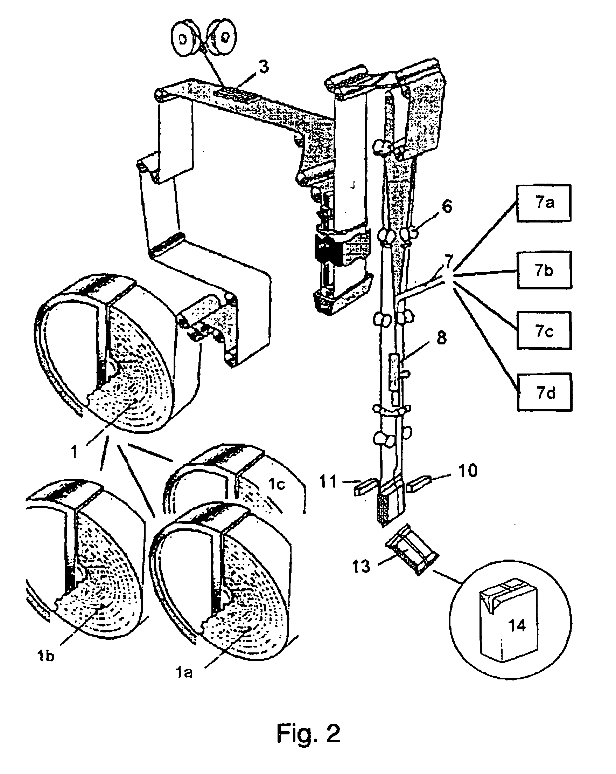

Fig.2 is a schematic view of an example of the wrapping/filling device according to the present invention.

In the embodiment of the wrapping/filling method or method for providing wrapping/filling as shown in Fig.1, anybody such as a small group and individual can easily select a commodity content and commodity wrapping vessel from a wide range of choices at any time and anywhere, and perform wrapping/filling as their own commodity in a small scale including a test wrapping/filling.

In the embodiment shown in Fig.1, when a client such as an individual, group, enterprise, agency, promoter of an event, public organization requests the wrapping/filling of the commodity, one or more than one computer (21 a, 21 b, 21 c, 21 d, 21 e) of the client having a request condition is connected to a server computer 22 having a wrapping/filing condition database via the Internet 20, and establishes the wrapping/filling information of the client, which is appropriate for the request condition and wrapping/filling condition. According to the request from the client computer, which has established the information, the wrapping/filling information is transmitted from the server computer 22 to one or more than one of the wrapping/filling devices (23a, 23b, 23c, 23d). By the wrapping/filling device, which received the information, a commodity content according to the wrapping/filling information is filled and wrapped by the wrapping vessel according to the information.

In the embodiment, via the Internet 20, the computer of the client having a request condition is connected to the server computer 22 having the wrapping/filling condition DB, and the wrapping/filling condition which is appropriate for the request condition of the client is provided.

The wrapping/filling condition DB is provided with various conditions as well as kinds of the commodity content and the wrapping vessel to be wrapped/filled, the design of vessel to be printed on the outward surface of the wrapping vessel, and the price, and is installed to be able to connect to the server computer.

In the example of the wrapping/filling device shown in Fig.2, a sealing tape is attached by an applicator 3 to one edge in the longitudinal direction of a roll of a web-type wrapping material 1 made of a fibrous substrate (for example, paper and the like) and plastic laminate with a folding line. The material is formed into a tubular shape by a molding roll 6 and longitudinal-line sealing device 8. A content is filled by the filling pipe 7 in the wrapping material, which is formed into the tubular shape. The filled wrapping material is sealed in the transverse direction of the tubular wrapping material by a transverse-line sealing device 10 and 11, and is individually cut in certain intervals, and is formed into a cushion-shaped or pillow-shaped primary shape vessel 13, and is formed into a brick-shaped final-shape vessel 14 by folding a flap tip along the folding line.

With the wrapping/filling device employed by the present invention, liquid foods, fluid foods, dry foods or the like, which are commodity contents according to the wrapping/filling information, are wrapped and filled in paper container, bottle, can, plastic container and the like, which are wrapping vessels according to the wrapping/filling information.

Accordingly, from among rolls (1a, 1b, 1c) of wrapping material, on which different designs are printed respectively, one roll of wrapping material is selected, according to the wrapping/filling information transmitted from the server computer 22, from among product tanks (7a, 7b, 7c, 7d) of commodity contents according to the wrapping/filling information, a commodity content such as orange juice, apple juice, refreshing beverage is selected, and the selected content is filled in the selected vessel.

In the embodiment of the wrapping/filling device shown in Fig.2, a transmission part transmiting result signals of wrapping/filling of the wrapping/filling device to the server computer is provided, and the result signals of wrapping/filling is transmitted from the server computer to the client computer. The client can promptly know the status of wrapping/filling of the commodity.

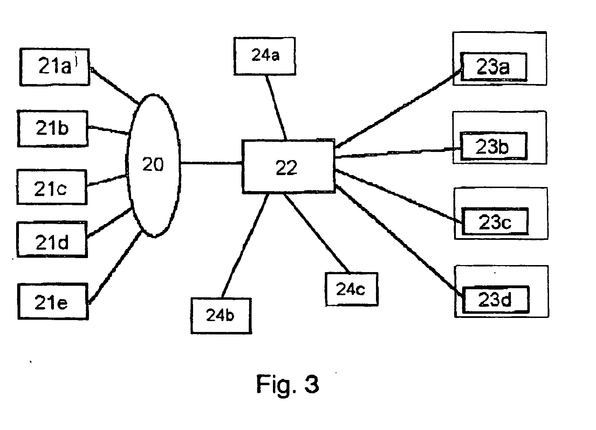

In the embodiment of the commodity management method shown in Fig.3 according to the present invention, in the wrapping/filling device, a part of or all of result information obtained by filling the commodity content according to wrapping/filling information and wrapping the same by the wrapping vessel according to wrapping/filling information, is received by the computer (24a, 24b, 24c) of the provider of the wrapping vessel and/or the content via the server computer 22, and supply trend of the wrapping vessel and/or the content and inventory management is analyzed to conduct the commodity management, based on the actual information.

The wrapping/filling information is, when a client requests wrapping/filling of the commodity, the wrapping/filling information of the client, which is appropriate for the request condition and wrapping/filling condition which are obtained by connecting computers (21 a, 21 b, 21 c, 21 d, 21e) of clients having a request condition to the server computer 22 having the wrapping/filling condition database via the Internet 20, being transmitted according to the request of the client computer from the server computer 22 to the wrapping/filling devices (23a,23b, 23c, 23d).

In the above embodiment, the transmission and reception between the computers (24a, 24b, 24c) of providers and the server computer 22 are performed via the internet, however, communication employing dedicated lines and radio transmission is allowable.

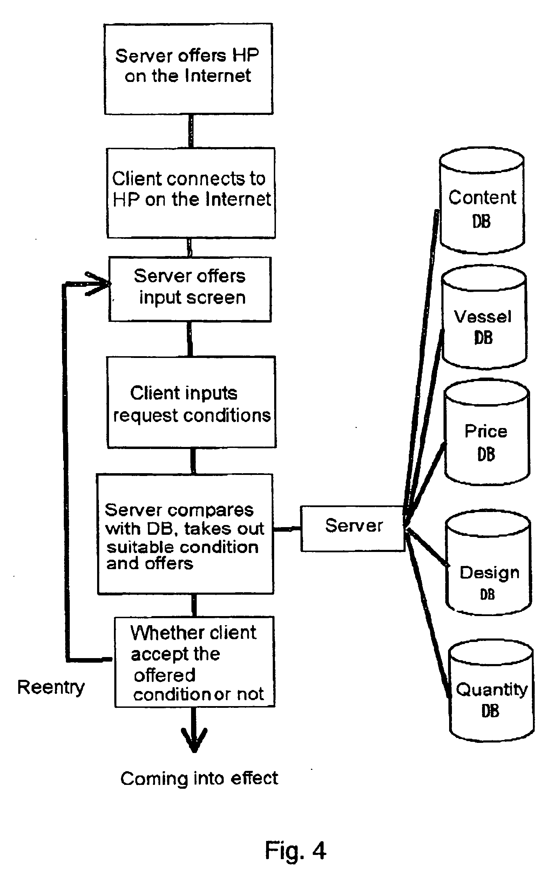

The procedure for obtaining the "wrapping/filling information of the client" according to the present invention will be explained with reference to Fig.4. A web site (Home Page, H.P.) will be opened and provided, where a server computer advertises for a request for wrapping/filling on the Internet. A client connects to the above-mentioned HP via the Internet. According to the request of the client, the HP side provides an input screen of the request condition to promote an input. The client inputs kinds of commodity content and wrapping vessel, the design of vessel which are printed on the outward surface of the wrapping vessel, price, quantity or the like at a certain field on the input screen and transmits them. Based on the transmitted data, the server computer checks database such as commodity content database, wrapping vessel database, vessel design database, price database, quantity database, and offers an appropriate condition to the client on the HP. The client is urged to decide whether he or she consents to the offered condition or not. When consented, the intention of agreement is transmitted and the agreement comes into effect. On the contrary, when it is not consented, the intention is transmitted to return to the input screen again.

The present invention enables anybody such as a small group and individual, to easily select the commodity content and the commodity wrapping vessel from among a wide range of choices anytime and anywhere, and to perform wrapping/filling the commodity content in a small scale including a test wrapping/filling.

The system of the present invention enables an individual, who needs the service, to easily perform the wrapping/filling of the necessary content via the Internet from anywhere when needed.

### Industrial Applicability

The wrapping/filling method, wrapping/filling device, method for providing wrapping/filling and commodity management method according to the present invention are utilized for wrapping vessels containing liquid foods such as milk, refreshing beverage.

## Claims

1. A wrapping/filling method, comprising:
connecting a computer (21) of a client having a request condition to a server computer (22) having a wrapping/filling condition database via the Internet (20), when a client requests wrapping/filling of a commodity;
obtaining wrapping/filling information of said client, which is appropriate for said request condition and said wrapping/filling condition;
transmitting said wrapping/filling information from said server computer (22) to said wrapping/filling device according to a request from said client computer (21); and
filling a commodity content according to said wrapping/filling information by said wrapping/filling device (23) and wrapping the same by a wrapping vessel (13,14) according to said information.

2. The wrapping/filling method according to claim 1, wherein the wrapping vessel (13,14) according to the wrapping/filling information is selected from paper vessel, bottle, can and plastic vessel.

3. The wrapping/filling method according to claim 1, wherein said commodity content according to the wrapping/filling information is selected from liquid foods, fluid foods and dry foods.

4. The wrapping/filling method according to claim 1, wherein in said wrapping/filling device, the design printed on the outward surface of said wrapping vessel (13,14) is included in said wrapping/filling information.

5. The wrapping/filling method, comprising in a wrapping/filling device, filling a commodity content according to the following wrapping/filling information and wrapping the same by a wrapping vessel (13,14) according to said information:
the wrapping/fitting information of a client, which is appropriate for the request condition and the wrapping/filling condition obtained by connecting the computer (21) of the client having a request condition to the server computer having a wrapping/filling condition database, when the client requests wrapping/filling of the commodity via the Internet, the wrapping/filling information being transmitted from the server computer (22) to the wrapping/filling device according to the request from the client computer (21).

6. The wrapping/filling method, comprising filling a commodity content according to the following wrapping/filling information and wrapping the same by the wrapping vessel (13,14) according to said information:
the wrapping/filling information of a client, which is appropriate for a request condition and a wrapping/filling condition obtained by connecting the computer (21) of the client having said request condition, who requests the wrapping/filling of the commodity, to the server computer (22) having said wrapping/filling condition database via the Internet (20), the wrapping/filling information being transmitted from said server computer (22) to said wrapping/filling device according to the request from said client computer(21).

7. The wrapping/filling device according to claim 6, comprising a transmission part transmitting the wrapping/filling signal of said wrapping/filling device (23) to said server computer (22), wherein said wrapping/filling signal is transmitted from said server computer (22) to the computer (21) of said client.

8. The method for providing wrapping/filling, comprising:
offerring a wrapping/filling condition via the Internet by a server computer (22) having a wrapping/filling condition database when a client having a request condition requests wrapping/filling of the commodity;
transmitting wrapping/filling information of the client, which is appropriate for said request condition and said wrapping/filling condition, from said server computer (22) to a wrapping/filling device (23) according to the request from a client computer;
filling a commodity content according to said wrapping/filling information by the wrapping/filling device (23) and wrapping the same by a wrapping vessel according to said information.

9. A commodity management method, comprised in a wrapping/filling device (23), comprising:
receving a part of or all of result information obtained by filling a commodity content according to the following wrapping/filling information, and by wrapping the same by the wrapping vessel (13, 14) according to said information by the computer of the provider of said wrapping vessel and/or content through a server computer (22); and
analyzing said wrapping vessel and/or the supply trend of the content and the inventory control to perform the commodity management from said result information:
the wrapping/filling information of a client, which is appropriate for the request condition and the wrapping/filling condition obtained by connecting the computer of the client having a request condition to the server computer having a wrapping/filling condition database, when the client requests wrapping/filling of the commodity via the Internet, the wrapping/filling information being transmitted from the server computer (22) to the wrapping/filling device (23) according to the request from the client computer (21).

## Patentansprüche

1. Verpackungs-/Füllverfahren, das umfasst:
Verbinden eines Computers (21) eines Client, der einen Anforderungszustand aufweist, mit einem Server-Computer (22), der eine Verpackungs-/Füll-Zustands-Datenbank aufweist, über das Internet (20), wenn ein Client Verpacken/Füllen einer Ware anfordert;
Einholen der Verpackungs-/Füll-Informationen von dem Client, die für den Anforderungszustand und den Verpackungs-/Füll-Zustand geeignet sind;
Senden der Verpackungs-/Füll-Informationen von dem Server-Computer (22) an die Verpackungs-/Füll-Vorrichtung gemäß einer Anforderung von dem Client-Computer (21); und
Füllen eines Wareninhaltes gemäß der Verpackungs-/Füll-Informationen durch die Verpackungs-/Füll-Vorrichtung (23) und Verpacken desselben durch einen Verpackungsbehälter (13, 14) gemäß der Informationen.

2. Verpackungs-/Füll-Verfahren nach Anspruch 1, wobei der Verpackungsbehälter (13, 14) gemäß der Verpackungs-/Füll-Informationen aus einem Papierbehälter, einer Flasche, einer Dose und einem Kunststoffbehälter ausgewählt wird.

3. Verpackungs-/Füll-Verfahren nach Anspruch 1, wobei der Wareninhalt gemäß der Verpackungs-/Füll-Informationen aus flüssigen Nahrungsmitteln, aus fließfähigen Nahrungsmitteln und aus trockenen Nahrungsmitteln ausgewählt wird.

4. Verpackungs-/Füll-Verfahren nach Anspruch 1, wobei das auf der Außenseite des Verpackungsbehälters aufgedruckte Design in den Verpackungs-/Füll-Informationen in der Verpackungs-/Füll-Vorrichtung beinhaltet ist.

5. Verpackungs-/Füll-Verfahren, das in einer Verpackungs-/Füll-Vorrichtung Füllen eines Wareninhaltes gemäß der folgenden Verpackungs-/Füll-Informationen und Verpackung desselben durch einen Verpackungsbehälter (13, 14) gemäß den Informationen umfasst:
die Verpackungs-/Füll-Informationen eines Client, die für den Anforderungszustand und den Verpackungs-/Füll-Zustand geeignet sind, die durch Verbinden des Computers (21) des Client, der einen Anforderungszustand aufweist, mit dem Server-Computer, der eine Verpackungs-/Füll-Zustands-Datenbank aufweist, eingeholt werden, wenn der Client Verpacken/Füllen der Ware über das Internet anfordert, wobei die Verpackungs-/Füll-Informationen von dem Server-Computer (22) an die Verpackungs-/Füll-Vorrichtung gemäß der Anforderung von dem Client-Computer gesendet werden.

6. Verpackungs-/Füll-Verfahren, das umfasst: Füllen eines Wareninhaltes gemäß der folgenden Verpackungs-/Füll-Informationen und Verpacken desselben durch den Verpackungsbehälter (13, 14) gemäß der Informationen; die Verpackungs-/Füll-Informationen eines Client, die geeignet sind für einen Anforderungszustand und einen Verpackungs-/Füll-Zustand, der erfasst wird, indem der Computer (21) des Client, der den Anforderungszustand aufweist, der das Verpacken/Füllen der Ware anfordert, mit dem Server-Computer (22), der die Verpackungs-/Füll-Zustands-Datenbank aufweist, über das Internet (20) verbunden wird, wobei die Verpackungs-/Füll-Informationen von dem Server-Computer (22) gemäß der Anforderung von dem Client-Computer (21) an die Verpackungs-/Füll-Vorrichtung gesendet werden.

7. Verpackungs-/Füll-Vorrichtung nach Anspruch 6, die ein Sendeteil umfasst, das das Verpackungs-/Füll-Signal der Verpackungs-/Füll-Vorrichtung (23) an den Server-Computer (22) sendet, wobei das Verpackungs-/Füll-Signal von dem Server-Computer (22) an den Computer (21) des Client gesendet wird.

8. Verfahren zum Bereitstellen von Verpacken/Füllen, das umfasst:
Anbieten eines Verpackungs-/Füll-Zustandes über das Internet durch einen Server-Computer (22), der eine Verpackungs-/Füll-Zustands-Datenbank aufweist, wenn ein Client, der einen Anforderungszustand aufweist, Verpacken/Füllen der Ware anfordert;
Senden der Verpackungs-/Füll-Informationen des Client, der für den Anforderungszustand und den Verpackungs-/Füll-Zustand geeignet ist, von dem Server-Computer (22) an eine Verpackungs-/Füll-Vorrichtung (23) gemäß der Anforderung von einem Client-Computer;
Füllen eines Wareninhaltes gemäß der Verpackungs-/Füll-Informationen durch die Verpackungs-/Füll-Vorrichtung (23) und Verpacken desselben durch einen Verpackungsbehälter gemäß der Informationen.

9. Warenmanagement-Verfahren, das in einer Verpackungs-/Füll-Vorrichtung (23) beinhaltet ist, welches umfasst:
Empfangen eines Teiles der oder aller Ergebnisinformationen, die durch Füllen eines Wareninhaltes gemäß den folgenden Verpackungs-/Füll-Informationen und durch Verpacken desselben durch den Verpackungsbehälter (13, 14) gemäß der Informationen von dem Computer des Lieferanten des Verpackungsbehälters und/oder des Inhaltes durch einen Server-Computer erfasst wurden; und
Analysieren des Verpackungsbehälters und/oder des Liefertrends des Inhaltes und der Bestandskontrolle zur Durchführung des Warenmanagements ausgehend von den Ergebnisinformationen;
Verpackungs-/Füll-Informationen eines Client, die geeignet sind für den Anforderungszustand und den Verpackungs-/Füll-Zustand, die erfasst werden, indem der Computer des Client, der einen Anforderungszustand aufweist, mit dem Server-Computer verbunden wird, der eine Verpackungs-/Füll-Zustands-Datenbank aufweist, wenn der Client Verpacken/Füllen der Ware über das Internet anfordert, wobei die Verpackungs-/Füll-Informationen von dem Server-Computer (22) gemäß der Anforderung von dem Client-Computer (21) an die Verpackungs-/Füll-Vorrichtung (23) gesendet werden.

## Revendications

1. Procédé d'emballage/de remplissage, comprenant les étapes suivantes :
la connexion d'un ordinateur (21) dudit client présentant une condition de demande à un ordinateur serveur (22) comportant une base de données de conditions d'emballage/de remplissage via l'Internet (20), lorsqu'un client demande l'emballage/le remplissage d'une denrée ;
l'obtention desdites informations d'emballage/de remplissage dudit client, qui sont appropriées pour ladite condition de demande et ladite condition d'emballage/de remplissage ;
la transmission desdites informations d'emballage/de remplissage à partir dudit ordinateur serveur (22) vers ledit dispositif d'emballage/de remplissage en fonction d'une demande provenant dudit ordinateur client (21) ; et
le remplissage d'une contenance de la denrée en fonction desdites informations d'emballage/de remplissage effectué par ledit dispositif d'emballage/de remplissage (23) et l'emballage de la denrée à l'aide d'un contenant d'emballage (13, 14) en fonction desdites informations.

2. Procédé d'emballage/de remplissage, selon la revendication 1, dans lequel le contenant d'emballage (13, 14), conformément aux informations d'emballage/de remplissage, est sélectionné parmi les postes suivants : contenant en papier, bouteille, boîte ou contenant en matière plastique.

3. Procédé d'emballage/de remplissage, selon la revendication 1, dans lequel ladite contenance de denrée, conformément aux informations d'emballage/de remplissage, est sélectionnée parmi les postes suivants : produits alimentaires liquides, produits alimentaires fluides et produits alimentaires secs.

4. Procédé d'emballage/de remplissage, selon la revendication 1, dans lequel le motif imprimé sur la surface externe dudit contenant d'emballage est inclus dans lesdites informations d'emballage/de remplissage se trouvant dans le dispositif d'emballage/de remplissage (23).

5. Procédé d'emballage/de remplissage, comprenant, au sein du dispositif d'emballage/de remplissage (23), le remplissage d'une contenance de denrée en fonction des informations d'emballage/de remplissage ci-après ainsi que l'emballage de la denrée à l'aide d'un contenant d'emballage (13, 14) en fonction desdites informations :
les informations d'emballage/de remplissage d'un client qui sont appropriées pour la condition de demande et la condition d'emballage/de remplissage, celles-ci étant obtenues à la suite de la connexion de l'ordinateur (21) du client présentant une condition de demande à l'ordinateur serveur comportant une base de données de conditions d'emballage/de remplissage, lorsque le client demande l'emballage/le remplissage de la denrée via l'Internet, alors que les informations d'emballage/de remplissage sont transmises à partir de l'ordinateur serveur (22) vers le dispositif d'emballage/de remplissage en fonction de la demande provenant de l'ordinateur client.

6. Procédé d'emballage/de remplissage, comprenant le remplissage d'une contenance de denrée en fonction des informations d'emballage/de remplissage ci-après ainsi que l'emballage de la denrée à l'aide du contenant d'emballage (13, 14) en fonction desdites informations :
les informations d'emballage/de remplissage d'un client qui sont appropriées pour une condition de demande et une condition d'emballage/de remplissage, celles-ci étant obtenues à la suite de la connexion de l'ordinateur (21) du client présentant ladite condition de demande, lequel demande l'emballage/le remplissage de la denrée, à l'ordinateur serveur (22) comportant ladite base de données de conditions d'emballage/de remplissage via l'Internet (20), alors que les informations d'emballage/de remplissage sont transmises à partir dudit ordinateur serveur (22) vers ledit dispositif d'emballage/de remplissage en fonction de la demande provenant dudit ordinateur client (21).

7. Dispositif d'emballage/de remplissage, selon la revendication 6, comprenant une partie Transmission laquelle transmet le signal d'emballage/de remplissage dudit dispositif d'emballage/de remplissage (23) vers ledit ordinateur serveur (22), cas dans lequel ledit signal d'emballage/de remplissage est transmis à partir dudit ordinateur serveur (22) vers l'ordinateur (21) dudit client.

8. Procédé servant à mettre à disposition l'emballage/le remplissage, comprenant les opérations consistant à :
offrir une condition d'emballage/de remplissage via l'Internet grâce à un ordinateur serveur (22) comportant une base de données de conditions d'emballage/de remplissage, lorsqu'un client ayant une condition de demande effectue une demande d'emballage/de remplissage de la denrée ;
transmettre les informations d'emballage/de remplissage du client, qui sont appropriées pour ladite condition de demande et ladite condition d'emballage/de remplissage, à partir dudit ordinateur serveur (22) vers un dispositif d'emballage/de remplissage (23) en fonction de la demande provenant d'un ordinateur client ;
remplir une contenance de denrée en fonction desdites informations d'emballage/de remplissage à l'aide du dispositif d'emballage/de remplissage (23), et emballer la denrée à l'aide d'un contenant d'emballage en fonction desdites informations.

9. Procédé de gestion de denrées, comprenant, au sein d'un dispositif d'emballage/de remplissage (23), les opérations suivantes :
recevoir une partie ou l'intégralité des informations de résultat obtenues à la suite du remplissage d'une contenance de denrée en fonction des informations d'emballage/de remplissage ci-après et à la suite de l'emballage de la denrée à l'aide du contenant d'emballage (13, 14) en fonction desdites informations données par l'ordinateur du fournisseur dudit contenant d'emballage et/ou de la contenance par l'intermédiaire d'un ordinateur serveur ; et
analyser ledit contenant d'emballage et/ou la tendance d'alimentation de la contenance ainsi que le contrôle d'inventaire afin de réaliser la gestion des denrées sur la base desdites informations de résultat ;
les informations d'emballage/de remplissage d'un client qui sont appropriées pour la condition de demande et la condition d'emballage/de remplissage, celles-ci étant obtenues à la suite de la connexion de l'ordinateur du client présentant une condition de demande à l'ordinateur serveur comportant une base de données de conditions d'emballage/de remplissage, lorsque le client demande l'emballage/le remplissage de la denrée via l'Internet, alors que les informations d'emballage/de remplissage sont transmises à partir de l'ordinateur serveur (22) vers le dispositif d'emballage/de remplissage (23) en fonction de la demande provenant de l'ordinateur client (21).
